# EUROPEAN PATENT SPECIFICATION

(11) **EP 0 728 077 B1**
(45) Date of publication and mention of the grant of the patent: **23.01.2002**
(21) Application number: 95901679.1
(22) Date of filing: 18.11.1994
(51) Int. Cl.: B60F 1/04

(54) **A METHOD OF TRANSFERRING A VEHICLE FOR OPERATION ON BOTH ROAD AND RAILROAD TRACK FROM ROAD TO RAILROAD OPERATION**
VERFAHREN ZUR ÜBERTRAGUNG EINES KOMBINATIONSFAHRZEUGS (SCHIENE/STRASSE) VOM STRASSENFAHRBETRIEB NACH SCHIENENFAHRBETRIEB
PROCEDE DE TRANSFERT D'UN VEHICULE ROUTIER ET FERROVIAIRE D'UN MODE D'EXPLOITATION ROUTIER A UN MODE D'EXPLOITATION FERROVIAIRE

(30) Priority: 19.11.1993 SE 9303850
(43) Date of publication of application: 28.08.1996
(73) Proprietor: SWEDISH RAIL SYSTEM AB SRS, S-171 21 Solna (SE); AB SJÖLANDERS, 283 00 Osby (SE)
(72) Inventor: ÖSTER, Bertil, S-175 61 Järfälla (SE)
(74) Representative: Wennborg, Göte
(86) International application number: SE9401103
(87) International publication number: WO9513930

(56) References cited:
- EP-A- 0 393 971
- DE-A- 4 039 768
- US-A- 4 048 925

## Description

The present invention relates to a method of shifting a combined road/rail load-carrying vehicle from a road-driving to a railroad-driving mode according to the characteristics of the first part of the claim.

### DESCRIPTION OF THE BACKGROUND ART

Vehicles which can be driven on both roads and railroad tracks are known to the art, see for instance SE-B 7506711-6 (Publication No. 402 243) (Storm) and its American counterpart US-A 4,048,925.

In many cases, vehicles of this nature function well for the purpose for which they are intended and, among other things, have the ability of enabling the vehicle in its railroad-driving mode to be turned round on the tracks without affecting traffic on an adjacent track.

Particularly in those instances when the known vehicle is to be turned round on the track or when the vehicle is to be shifted from its road-driving mode to its railroad-driving mode and the adjacent road on which the vehicle stands is narrow or the area between road and railroad track is very confined, it is often necessary to use a ramp between road and railroad track, particularly in order for the front road wheels of the vehicle to be able to carry out the movements intended.

It is often necessary to carry such a ramp on the vehicle itself, therewith reducing its goods carrying capacity with regard to other loads. Furthermore, it is difficult in many cases to mount the ramp in a manner which will enable the aforesaid conversion or transfer to take place, and at times it is impossible to mount the ramp in a way to permit to shift the vehicle or turn the vehicle on the railroad tracks, therewith making it necessary to move the vehicle to another place in which the operation can be carried out. This naturally extends the time required to effect the operation and also increases costs involved therewith.

Further examples of the present state of the art are found in EP-A2 0,393,971 and D-A1 4,039,768 closest prior art, which describe a frame structure mounted on vehicles of the aforesaid kind for facilitating transfer of the vehicle from a road to a railroad track, and vice versa, the second one comprising at least two pairs of lifting actuators at least one of which may be mounted to induce a slight arcuate motion of the vehicle above the track.

### OBJECT OF THE INVENTION

One object of the present invention is to eliminate the necessity to use a ramp with aforesaid drawbacks and other drawbacks associated with the known vehicles,while, at the same time, enabling the vehicle to be shifted from a road-driving mode to a railroad-driving mode even in those cases where circumstances are unfavourable in this respect, for instance because of a narrow road or confined territory or because of the presence of banks and humps between the road and the railroad track.

### SUMMARY OF THE INVENTION

This object is fulfilled by an inventive method of the aforesaid kind having the characteristic features set forth in the claim.

Because the vehicle has been provided with a bogie and an articulated framework of the kind defined, driving of the vehicle on the front and the rear road wheels respectively can be avoided in the final stage of switching the vehicle from a road-driving to a railroad-driving mode, and vice versa, which is particularly advantageous in those cases when a bank or the terrain in general in the proximity of the track makes it difficult to drive the vehicle with the aid of the road wheels on the existing ground surface, and not least on the embankment of a rail track.

When using a vehicle according to the invention, no ramp is required in cases of this nature when switching from one mode to another.

In certain cases, it is sufficient for the frame structure to include one single unit, which will then conveniently be located in the region of, and preferably immediately behind, the front road wheel axle of the vehicle. This will enable the frame unit to coact with the articulated rail-wheel equipped bogey of the vehicle when the rail wheels are in contact with the rails. The front road wheels of the vehicle therewith need to be used solely for setting down the vehicle after having lifted the vehicle during the mode switching operation, i.e. when the front road wheels of the vehicle need not be used for driving the vehicle in the area lying proximate to the tracks.

It also lies within the scope of the invention to use a corresponding articulated rear frame unit, which therewith coacts with a front bogey placed forwardly of the front road wheel axle of the vehicle and with two axles which carry rail-running wheels.

However, the articulated frame will preferably include in practice a front unit which is located between the front axle carrying said rail-running wheels and the rear road wheel axle, preferably at a short distance behind the front road wheel axle, and a rear unit located between the rear road wheel axle and the rear bogey which is rotatable about a vertical axis.

The use of a frame structure which is comprised of two such units belongs to prior art. It increases the lifting and displacement ability of the system in use. Furthermore, when shifting the vehicle from a road-driving to a railroad-driving mode, and vice versa, the vehicle as is known from prior art can be moved in parallel from and to a respective position in which the vehicle is placed at the side of the track, and parallel with said track. The same applies when moving the vehicle in parallel between adjacent tracks.

The frame structure or its units may include one or more transverse beam elements connected to the vehicle chassis having on both sides of said element outwardly projectable beam parts which carry at their ends lifting frame parts which support lifting legs that can be brought into engagement with the underlying supporting surface, e.g. the ground.

The unit which functions to lift and to move the vehicle sideways will therewith occupy only a small amount of space and need not therefore present an obstacle to the normal working of the vehicle.

Each frame unit may include two mutually joined transverse beam elements, each including a telescopic beam part, wherein each beam part is acted upon by a hydraulic piston-cylinder device having a piston rod which effects sideways movement of the beam part and associated lifting frame part, said piston-cylinder device preferably being included in the beam element.

In turn, the lifting frame parts will conveniently include telescopic, hydraulically operated lifting legs which can be brought into contact with the ground when lifting the vehicle.

The telescopic beam parts will be able to move extensively, and therewith reduce the number of lifts that need be made, due to the feature that the frame unit concerned is mounted on the chassis in a manner which will enable the frame unit to rotate about an axle relative to the chassis and so that the vehicle will be swung about the vertical axle of the bogie.

The invention will now be described in more detail with reference to an exemplifying embodiment thereof and also with reference to the accompanying schematic drawings.

### BRIEF DESCRIPTION OF THE DRAWINGS

Fig. 1 is a side view of a vehicle constructed in accordance with the invention and which can be driven on both roads and railroads, said vehicle including a mobile working platform (personnel lift).

Figs. 2-6 illustrate different stages of operation according to prior art when shifting the vehicle from a road driving mode to a rail track driving mode, with a starting position in which the vehicle is positioned parallel to the rails of the track.

Fig. 7 is a perspective view of a frame unit mounted for limited rotational movement on the vehicle for effecting lifting and sideways-translatory movement.

Figs. 8-10 illustrate schematically and from above the bottom part or the wheel chassis of the inventive vehicle in different positions when carrying out the inventive method for transferring the vehicle from a road to a railroad track from a position in which the vehicle is angled to the track.

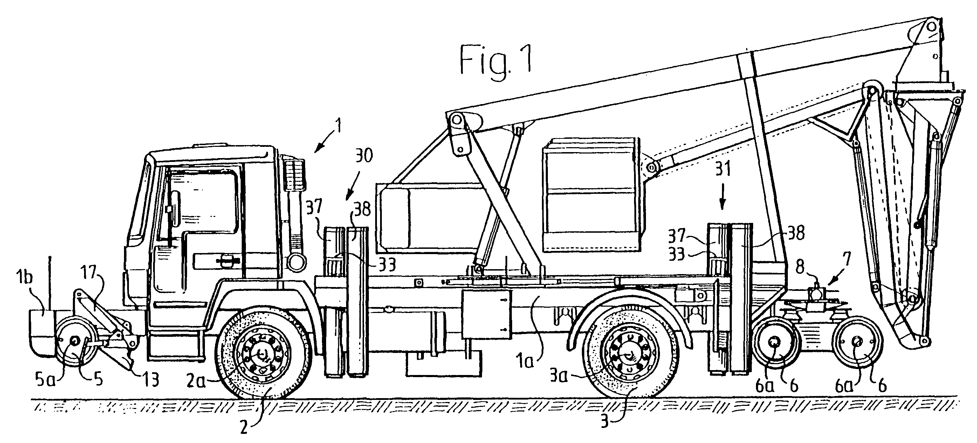

Fig. 1 illustrates a load-carrying vehicle 1 having a mobile loading platform. The vehicle is a combined road/rail load-carrying vehicle and to this end has a front wheel axle 2a for front road wheels 2 and a rear wheel axle 3a for rear road wheels 3.

To enable the vehicle to be driven on railroad tracks, there is included behind the rear wheel axle 3a a bogie 7 which is rotatable, articulated, about a vertical axle 8 in relation to the wheel chassis 1a, and which is provided with rail engaging wheels 6 carried on rear rail wheel axles 6a.

The bogie 7 can also be moved vertically, so as to bring the rail wheels 5, 6 into engagement with the rails while lifting the rear road wheels 3 out of engagement with the ground surface when transferring the vehicle to the railroad track and while the vehicle moves along the track.

Although not shown, one or both of the rail wheel axles 6a is/are driven by a motor.

A front wheel axle 5a carrying rail wheels 5 is mounted behind the front bumper 1b of the vehicle, wherein the wheel axle 5a can be lowered towards or lifted away from the rails by means of a linkage system 12, 13 activated by a hydraulic piston-cylinder device 11, so as to lower the wheel axle down towards or to lift the wheel axle away from the rails and therewith bring the rail wheels 5 into or out of engagement with the rails, in this latter case when the vehicle is to be road-driven on the wheel pairs 2, 3.

The vehicle chassis 1a also includes a frame structure having a front frame unit 30, which is located immediately behind the front road wheels 2, and a rear frame unit 31, which is located between the rear road wheels 3 and the bogie 7 carrying the rail wheels 6.

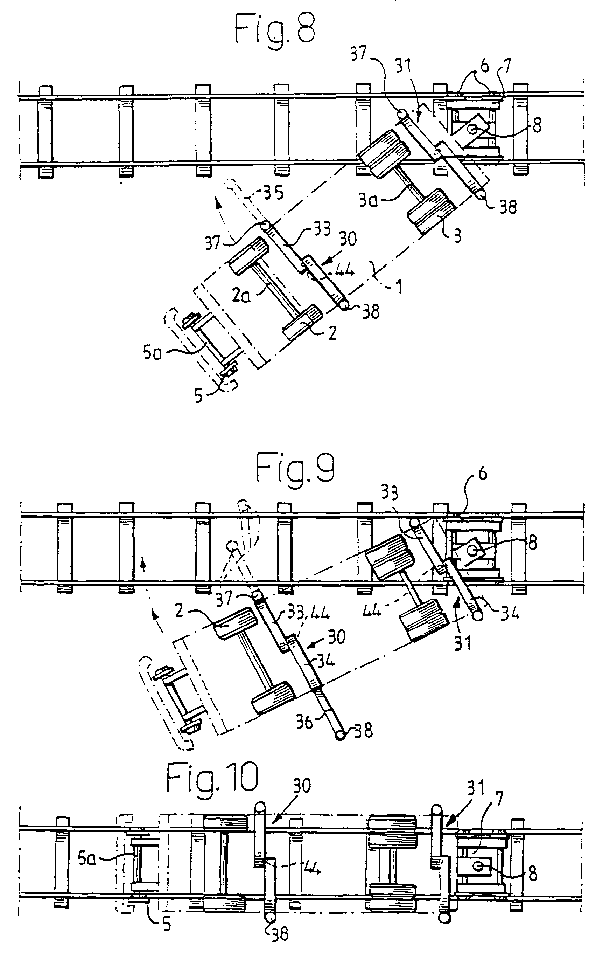

As will best be seen from Fig. 7, each frame unit 30 and 31 includes two mutually connected transverse beam elements 33, 34 which are connected to the vehicle chassis and which have beam parts 35 and 36 respectively which can be extended out telescopically from both sides of the respective beam elements. The beam parts carry at each end thereof a respective lifting frame part 37, 38 which includes lifting legs 39, 41 and 40, 42 respectively which can be extended telescopically into abutment with the underlying ground surface. The beam elements 33, 34 of the front frame unit 30 are connected to the vehicle chassis through the medium of a vertical axle 44 which permits a certain degree of rotation between the vehicle and the unit.

The beam elements 33 and 34 include hydraulic piston-cylinder devices 51, wherein telescopic movement of the beam parts 35 and 36 is effected through the medium of the piston rods 53 of respective piston-cylinder devices.

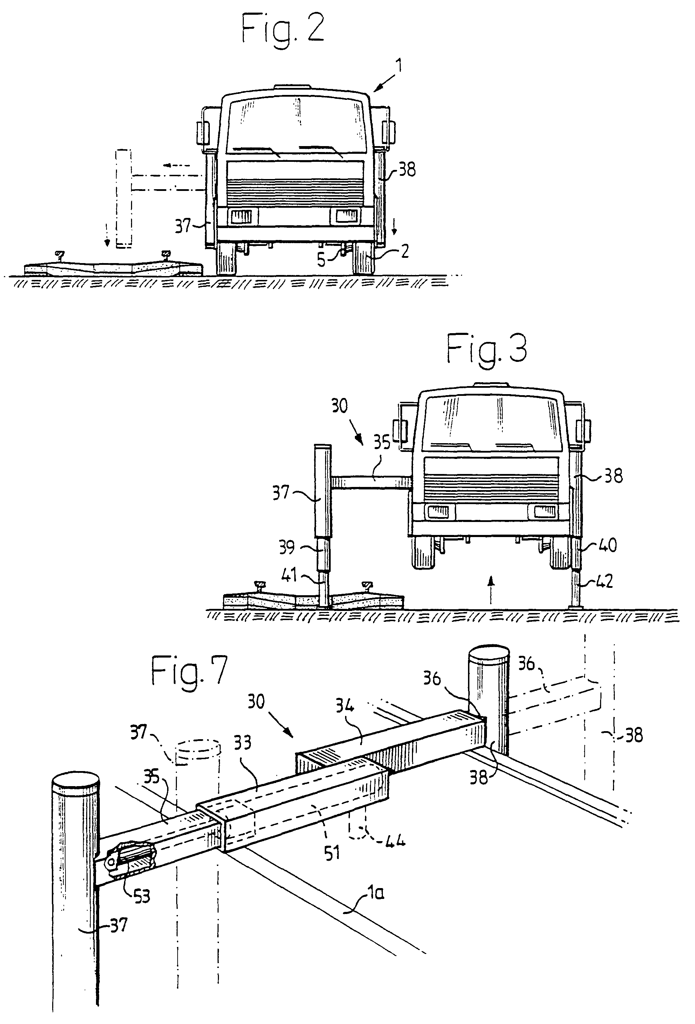

Figs. 2-6 illustrate a number of steps according to prior art which are carried out when switching the vehicle 1 from a road driving mode to a rail driving mode with the aid of the described frame structure comprising a front unit 30 and a rear unit 31. In the stage illustrated in Fig. 2, the vehicle has initially been placed adjacent the railroad track and parallel therewith.

Fig. 2 also illustrates sideways movement of the lifting frame parts 37 carried on the right-hand side of the vehicle, by telescoping the beam parts 35 in the beam elements 33 in response to activation of respective hydraulic devices 51 and their associated piston rods 53.

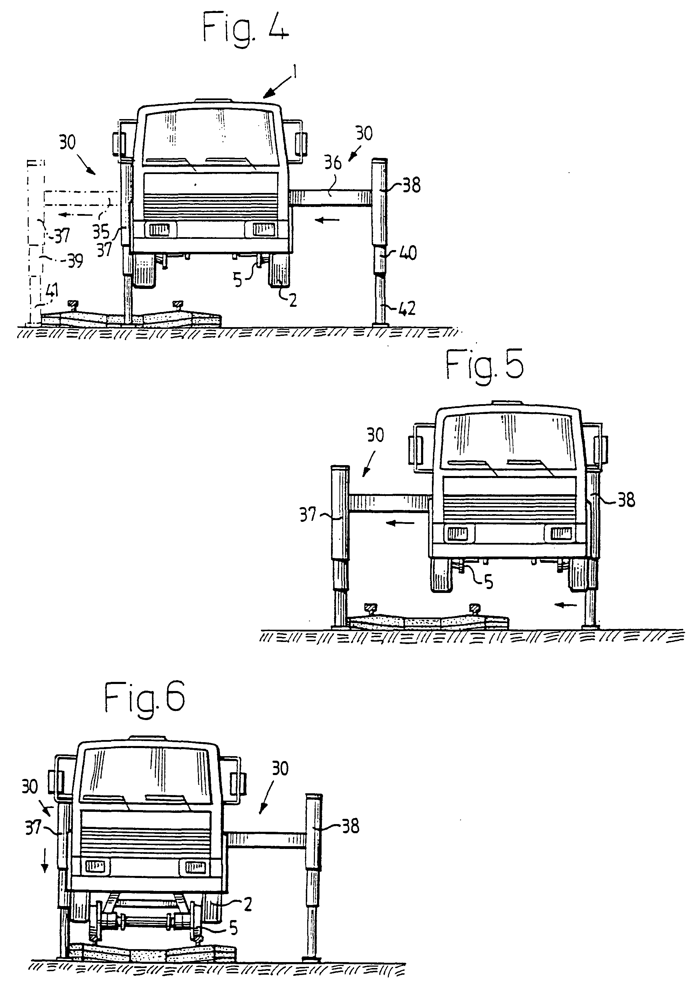

Upon completion of this sideways movement of the lifting frame parts 37, the lifting legs 39, 41 and 40, 42 in all four lifting frame parts 37, 38 are telescoped out, therewith lifting the vehicle to the position shown in Fig. 3.

Lateral translation of the vehicle to the position shown in Fig. 4 is achieved by activating hydraulics (not shown) in the left-hand beam elements 34, in which position the lifting legs are retracted so that the vehicle will be placed on the underlying supporting surface so that a re-lift can be made.

Fig. 5 illustrates the stage in which the right-hand lifting frame parts are again moved sideways and all lifting legs have been placed in engagement with the underlying supporting surface, so as to lift the vehicle. After having moved the vehicle sideways to the position shown in Fig. 6, the rail wheels 5 on the front rail wheel axle 5a and the rail wheels 6 on the rear bogie 7 are brought into engagement with the rails 21, 22 of the track, so that the vehicle is supported by the rail wheels 5, 6, with the road wheels 2, 3 in their uplifted position. The vehicle can now be driven on the rails powered by the power plant (not shown) installed in the bogie 7.

The described switching of the vehicle driving mode can be achieved satisfactorily provided that there is sufficient space to position the vehicle adjacent the track. The procedure is the same when transferring the vehicle between two mutually adjacent tracks.

Figs. 8-10 illustrate a method of procedure according to the present invention that is applied when it is not possible to position the vehicle parallel with the track, or when the terrain proximate the track cannot be readily negotiated, for instance when the only road leading to the track is narrow and/or the road defines an angle other 90° thereto.

When practicing the inventive method, the front unit 30 of the frame structure, this unit having limited rotatability, is caused to coact with the rail wheels on the rear bogie 7 in a manner described below.

The vehicle has, for instance, reversed at an angle of 90° (not shown) towards the track, so that when lifted, the bogie 7 is located above the track. With the vehicle supported by the road wheels 2, 3 and the bogie 7 in a raised position, the bogie is rotated about its vertical axle 8 to bring the bogie into alignment with the rails, whereupon the bogie is lowered so that the rail wheels 6 engage the rails and the rear road wheels 3 are slightly raised from the underlying supporting surface. The hydraulic device 51 including the piston rod 53 in the right-hand beam element 51 of the frame structure 30 is therewith activated so as to telescope the beam part 35 and move the lifting frame 37 outwards away from the vehicle, in the manner indicated in chain lines in Fig. 8. The hydraulic devices in the two lifting frames 37, 38 are activated so as to telescope the support legs 39, 41 and 40, 42 respectively, so as to lift the vehicle and the front road wheels 2 away from the underlying supporting surface. The vehicle is now supported solely by the frame structure 3 together with the rear bogie 7.

After having moved the vehicle sideways, during which movement the vehicle is rotated about the vertical axle 8 of the bogie 7, and also to a lesser extent relative to the frame unit 30 about the vertical axle 44, and the bogie carrying the rail wheels 6 is moved along the railroad track and the lifting legs 39, 41 and 40, 42 are retracted so as to lower the front road wheels 2 onto the underlying supporting surface to support the vehicle, and a so-called re-lift is effected with the front frame unit 30. Fig. 8 illustrates the procedure followed after carrying out a few re-lifts, wherewith the vehicle defines an angle of about 45° with the track.

Fig. 9 illustrates the stage in which the vehicle has been swung further about the axle 8 - and about the axle 44-while moving the bogie 7 along the track at the same time.

Fig. 10 illustrates the final stage of the operation, in which the vehicle has been aligned exactly coaxial with the track and the rail wheels 5 on the front rail wheel axle 5a have been lowered onto the rails of the track, so that the vehicle is supported thereby and also by the rail wheels 6 on the bogie 7, i.e. the vehicle is coaxially aligned for movement along the track and can be driven therealong as soon as the legs 39, 41, 40, 42 in the lifting frames 37, 38 have been retracted.

Alternatively the bogie 7 may be fitted to the front end of the vehicle, therewith enabling the transfer operation to be effected through the coaction between one such front bogie and a rear rotatable frame unit 31.

It also lies within the scope of the invention to enable the direction of the vehicle to be changed through 180°, which can be effected without the rail wheels 6 on the bogie 7 leaving their engagement with the track.

It will be evident that the position of the vehicle can be changed without the vehicle encroaching on traffic using an adjacent railroad track.

## Claims

1. A method for shifting a road/rail carrying vehicle (1) from a road driving to a railroad driving mode or for switching said vehicle between mutually adjacent tracks, wherein the vehicle includes
1) a wheel chassis (1) having a front steerable wheel axle (2a) and a rear wheel axle (3a), both of which carry road wheels (2; 3),
2) front and rear wheel axles (5a; 6a) which carry rail wheels (5; 6), said rail wheel axles (5a; 6a) being vertically movable so as to bring the rail wheels (5; 6) into engagement with the railroad track while lifting adjacent road wheels out of engagement with the underlying supporting surface when transferring the vehicle to the railroad track and while moving the vehicle along said track,
3) one or two frame units (30 or 31) comprising horizontal beam elements (33, 34) having telescopic beam parts (35; 36) which carry at respective ends thereof lifting frame parts (37, 38) including vertical lifting legs (39, 41; 40, 42), said frame unit (30) or one (30) of said frame units (30; 31) having a central vertical axle (44) permitting a limited rotational movement of the chassis relative to said frame unit (30) when lifted by the legs,
the method including the steps:
a) bringing the lifting legs of said frame unit (30) having said central vertical axle (44) into engagement with the underlying supporting structure, or the ground, to lift the vehicle, and
b) moving the beam elements (33, 34) of said frame unit (30) sideways in one direction incrementally in coaction with road wheels of the vehicle to rotate the chassis a limited amount relative said frame unit while repeatedly lowering and relifting said vehicle,
**characterized by**
c) driving the vehicle towards the track with a bogie (7) which carries two of said front (5a) or two of said rear (6a) rail wheel axles with rail wheels (5; 6) and which bogie can be rotated about a vertical axle (8) relative to the wheel chassis (1), first in the driving direction so that the vehicle will define an acute or 90° angle with the track and aligning the bogie (7), exactly above and in co-axial alignment with the track and lowering it theretowards so that adjacent road wheels (2 or 3) are lifted from the underlying supporting surface;
d) bringing the lifting legs (41, 42) of said frame unit (30) having said vertical axle (44) and being positioned at a certain distance from the bogie (7) into engagement with the underlying supporting surface to lift adjacent road wheels (2 or 3) away from said surface and moving the beam elements (33; 34) of said frame unit laterally in one and the same direction while rotating the vehicle about said central axle (44) and said bogie axle (8) and moving the bogie along the track;
e) performing said rotational movement of the vehicle about said two axles (44, 8) incrementally with re-lifting of the vehicle, until the vehicle is exactly above and in co-axial alignment with the railroad track; and
f) lowering the rail wheel axle (5a) with associated rail wheels (5) situated opposite the bogie (7) onto the track.

## Patentansprüche

1. Verfahren zum Platzwechseln eines Straße-/Schienen-Lasttransportfahrzeugs (1) von einem Straßenfahrmodus in einen Eisenbahnfahrmodus, oder zum Umsetzen des genannten Fahrzeugs zwischen einander benachbarten Gleisen, wobei das Fahrzeug aufweist:
1) ein Radchassis (1) mit einer vorderen, steuerbaren Radachse (2a) und einer hinteren Radachse (3a), die beide Straßenräder (2; 3) tragen;
2) vordere und hintere Radachsen (5a; 6a), die Schienenräder (5; 6) tragen, wobei die genannten Schienenradachsen (5a, 6a) vertikal bewegbar sind, derart, dass die Schienenräder (5; 6) zum Angreifen am Eisenbahngleis gebracht werden, während benachbarte Straßenräder von der darunter liegenden Tragoberfläche abgehoben werden, wenn das Fahrzeug zum Eisenbahngleis transferiert wird und wobei das Fahrzeug entlang des genannten Gleises bewegt wird;
3) einen oder zwei Tragwerkseinheiten (30 oder 31), die horizontale Balkenelemente (33, 34) umfassen, mit Teleskopbalkenteilen (35; 36), welche an jeweils entsprechenden Enden desselben Hebetragwerksteile (37; 38) aufweisen, die vertikale Hebebeine (39, 41; 40, 42) enthalten,
wobei die genannte Tragwerkseinheit (30) oder eine der genannten Tragwerkseinheiten (30; 31) eine zentrale, vertikale Achse (44) aufweist, die eine begrenzte Drehbewegung des Chassis relativ zu der genannten Tragwerkseinheit (30) gestattet, wenn es von den Beinen angehoben wird;
wobei das Verfahren folgende Schritte einschließt:
a) Bringen der Hebebeine der genannten Tragwerkseinheit (30), versehen mit der zentralen, vertikalen Achse (44), zum Angreifen an der darunter liegenden Stützkonstruktion, oder am Boden, um das Fahrzeug anzuheben, und
b) Inkrementelles Bewegen der Balkenelemente (33, 34) der genannten Tragwerkseinheit (30) seitwärts in einer einzelnen Richtung im Zusammenwirken mit den Straßenrädern des Fahrzeugs, um das Chassis um einen begrenzten Betrag relativ zu der genannten Tragwerkseinheit bei wiederholtem Absenken und Wiederanheben des genannten Fahrzeugs zu drehen,
**gekennzeichnet durch:**
c) Fahren des Fahrzeugs zum Gleis mit einem Bogie (7), der zwei der genannten vorderen (5a) oder zwei der genannten hinteren (6a) Schienenradachsen mit Schienenrädem (5; 6), trägt und wobei der Bogie um eine vertikale Achse (8) relativ zu dem Radchassis (1a) gedreht werden kann, zuerst in die Fahrtrichtung, so dass das Fahrzeug einen spitzen Winkel oder einen 90°-Winkel mit dem Gleis und der Ausfluchtung des Bogies (7) definiert, exakt über und in koaxialer Ausrichtung mit dem Gleis, und Absenken desselben auf dieses, so dass benachbarte Straßenräder (2 oder 3) von der darunter liegenden Tragoberfläche abgehoben werden;
d) Bringen der Hebebeine (41, 42) der genannten Tragwerkseinheit (30), versehen mit der genannten vertikalen Achse und positioniert in einem bestimmten Abstand von dem Bogie (7), zum Angreifen an der darunter liegenden Tragoberfläche, um benachbarte Straßenräder (2 oder 3) von der genannten Oberfläche wegzubewegen, und Bewegen der Balkenelemente (33; 34) der genannten Tragwerkseinheit lateral in ein und dieselbe Richtung bei gleichzeitigem Drehen des Fahrzeugs um die genannte zentrale Achse (44) und die genannte Bogieachse (8), und Bewegen des Bogies entlang des Gleises;
e) Durchführen der genannten Drehbewegung des Fahrzeugs um die genannten beiden Achsen (44, 8) inkremental mit einem erneuten Anheben des Fahrzeugs, bis sich das Fahrzeug exakt über und in koaxialer Ausfluchtung mit dem Einsenbahngleis befindet; und
f) Absenken der Schienenradachse (5a) mit den zugehörenden Schienenrädern (5), platziert in Gegenposition zum Bogie (7) auf dem Gleis.

## Revendications

1. Procédé pour changer un véhicule de transport (1) routier/ferroviaire d'un mode de marche routière vers un mode de marche ferroviaire ou pour déplacer le véhicule entre deux voies mutuellement adjacentes, dans lequel le véhicule comporte
1) un chassis (1) muni de roues comprenant un essieu avant directeur pour roue (2a) et un essieu arrière pour roue (3a), chacun d'eux portant des roues pour route (2,3),
2) des essieux avant et arrière (5a;6a) qui portent des roues pour voie ferrée, les essieux à roues pour voie ferrée (5a;6a) pouvant être déplacés verticalement de façon à amener les roues pour voie ferrée en contact avec les rails de la voie ferrée pendant que les roues pour route adjacentes sont soulevées et séparées de la surface portante sousjacente quand le véhicule est transféré vers la voie ferrée et quand le véhicule se déplace sur cette voie,
3) une ou deux unités de bâti (30 ou 31) comprenant des éléments de poutre horizontale (33,34) avec des sections à poutre téléscopique (35,36) qui portent à leur bouts respectifs des sections (37,38) pour soulever le bâti comportant des pieds verticaux de soulevage (39,41; 40,42), ladite unité de bâti (30) ou une seule desdites unités de chassis (30;31) ayant une axe verticale centrale (44) qui permet un mouvement rotationnel limité du chassis par rapport à l'unité de bâti (30) quand celui-ci est soulevé par les pieds,
le procédé comprenant les étapes:
a) amener les pieds de soulevage de ladite unité de bâti (30) ayant ledit axe central vertical (44) en contact avec la structure portante sousjacente, ou bien avec le sol, de façon à soulever le véhicule, et
b) déplacer latéralement les éléments de poutre (33,34) de ladite unité de bâti (30) de façon incrémentielle dans une direction et en coopération avec les roues de voie du véhicule afin de faire tourner le chassis d'une quantité limitée par rapport à l'unité de bâti en descendant et soulevant le véhicule à plusieurs reprises,
**caractérisé en ce que**
c) conduire le véhicule vers la voie avec un bogie (7) qui porte deux desdits essieux avant (5a) ou deux desdits essieux arrière (6a) à roues pour voie ferrée munis de roues pour voie ferrée (5;6), ledit bogie pouvant être tourné autour d'un axe vertical (8) par rapport au chassis (1) à roues, premièrement dans la direction de conduite de façon à ce que le véhicule définit un angle aigu ou de 90° avec les rails et aligner le bogie (7), exactement au-dessus des et en alignement coaxial avec les rails, et le descendre vers les rails de façon à ce que les roues pour route adjacentes (2 ou 3) sont soulevées de la surface portante sousjacente;
d) amener les pieds de soulevage (41,42) de ladite unité de bâti (30) munie dudit axe vertical (44) et positionnés à une certaine distance du bogie (7) en contact avec la surface portante sousjacente de façon à soulever les roues de route (2 ou 3) adjacentes de la surface,et déplacer latéralement les éléments de poutre (33;34) de ladite unité bâti toujours dans la même direction tout en tournant le véhicule autour dudit axe central (44) et autour dudit axe de bogie (8), et déplacer le bogie lelong des rails;
e) exécuter ledit mouvement rotationnel du véhicule autour desdits deux axes (44,8) de façon incrémentielle lors du soulevage renouvelé du véhicule, jusqu'à ce que le véhicule se trouve exactement au-dessus de et en alignement coaxial avec les rails de la voie ferrée; et
f) descendre sur les rails l'essieu (Sa) à roues pour voie ferrée avec les roues (5) pour voie ferrée associées situé du côté opposé du bogie (7).
